# EUROPÄISCHE PATENTSCHRIFT

(11) **EP 4 119 982 B1**
(45) Veröffentlichungstag und Bekanntmachung des Hinweises auf die Patenterteilung: **07.06.2023**
(21) Anmeldenummer: 21186165.3
(22) Anmeldetag: 16.07.2021
(51) Int. Cl.: G01S 17/04, F16P 3/14, G01S 17/10, G01S 17/931

(54) **ÜBERWACHUNGSEINRICHTUNG UND EIN VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 18.01.2023
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- EP-A1- 3 339 715
- EP-A1- 3 882 505
- DE-U1-202020 103 157
- ALLEN BRADLEY: "User Manual Safezone Multizone Safety Laser Scanner", INTERNET CITATION, 1. Mai 2005 (2005-05-01), Seiten 1-79, XP002591411, Gefunden im Internet: URL:http://samplecode.rockwellautomation.c om/idc/groups/literature/documents/um/442l -um002_-en-p.pdf [gefunden am 2010-07-09]

## Beschreibung

Die Erfindung betrifft eine Überwachungseinrichtung und ein Verfahren zum Betrieb einer Überwachungseinrichtung.

Derartige Überwachungseinrichtungen können zur Sicherung von Gefahrenbereichen an stationären Maschinen oder Anlagen vorgesehen sein, wobei dort ein Gefahrenbereich, in welchem von der Maschine oder Anlage gefahrbringende Bewegungen ausgeführt werden, abzusichern ist.

Weiterhin können derartige Überwachungseinrichtungen zur Sicherung des Vorfelds an Fahrzeugen eingesetzt werden, um einen Kollisionsschutz für das Fahrzeug zu realisieren.

In beiden Fällen ist es bekannt, distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, sodass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand erzeugt. Nimmt das Schaltsignal bei einer Objektdetektion den Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine oder Anlage kann die Sicherheitsfunktion darin bestehen, die Maschine oder Anlage stillzusetzen. Bei der Überwachung eines Fahrzeugs kann die Sicherheitsfunktion darin bestehen, das Fahrzeug anzuhalten.

Ein Problem bei derartigen Überwachungseinrichtungen besteht darin, das Schutzfeld an sich ändernde Randbedingungen anzupassen.

Die einen Stand der Technik Gemäß Artikel 54 (3) EPÜ bildende EP 3 882 505 A1 betrifft eine Überwachungseinrichtung mit einem optischen Sensor, mittels dessen eine Objektüberwachung innerhalb eines Schutzfeldes durchgeführt wird. Zwei Konturerkennungsfelder mit einander zumindest näherungsweise entsprechenden Längen, wobei die Längen so dimensioniert sind, dass die Konturerkennungsfelder über das Schutzfeld hervorstehen und dort zumindest teilweise nicht überlappen, sind vorgesehen. Entweder ist ein über das Schutzfeld hervorstehendes mit den ersten beiden Konturerkennungsfeldern zumindest teilweise nicht überlappendes drittes Konturerkennungsfeld vorgesehen und/oder es ist eine Zeitüberwachungseinheit vorgesehen, mittels derer die zeitliche Folge von Objekteingriffen in den beiden ersten Konturerkennungsfeldern überprüfbar ist. Abhängig davon, ob im ersten und/oder zweiten Konturerkennungsfeld ein Objekteingriff vorliegt oder nicht und abhängig davon ob im dritten Konturerkennungsfeld ein Objekteingriff vorliegt oder nicht und/oder abhängig von Kontrollsignalen der Zeitüberwachungseinheit wird das Schutzfeld vergrößert oder verkleinert.

Die EP 3 339 715 A1 betrifft ein Zugangsabsicherungssystem, welches einen ersten Sicherheitssensor, einen zweiten Sicherheitssensor und eine elektronische Steuereinrichtung, die mit dem ersten und dem zweiten Sicherheitssensor in Signalverbindung steht, umfasst. Der erste und der zweite Sicherheitssensor sind Laserscanner, die im Betrieb jeweils ein Sicherheits-Schutzfeld und jeweils wenigstens ein erstes Detektions-Schutzfeld ausbilden und derart angeordnet sind, dass die ersten Detektions-Schutzfelder wenigstens bereichsweise nicht überlappen. Die elektronische Steuereinrichtung ist dazu ausgebildet, beim Eindringen eines Objekts in das Sicherheits-Schutzfeld des ersten und/oder des zweiten Sicherheitssensors eine Sicherheitsfunktion auszulösen und den Betriebszustand des Zugangsabsicherungssystems zu ändern, wenn ein Eindringen des Objekts sowohl in das erste Detektions-Schutzfeld des ersten Sicherheitssensors als auch in das erste Detektions-Schutzfeld des zweiten Sicherheitssensors festgestellt wird.

In ALLEN BRADLEY: "User manuel Safezone Multizone Safety Laser Scanner", INTERNET CITATION, 1. Mai 2005 (2005-05-01), Seiten 1-79, XP002591411, Gefunden im Internet: URL:http://samplecode.rockwellautomation.com/die/groups/internature/documents/um/4421-um002 -en-p.pdf ist ein für eine Schutzfeldüberwachung ausgebildeter Sicherheits-Laserscanner beschrieben. Dieser kann in mobilen Applikationen umgesetzt werden, beispielsweise zur Vorfeldüberwachung an fahrerlosen Transportsystemen.

Die DE 20 2020 103 157 U1 betrifft eine Überwachungseinrichtung mit einem optischen Sensor, mittels dessen eine Objektüberwachung innerhalb eines Schutzfeldes durchgeführt wird. Mit dem optischen Sensor wird zusätzlich eine Objektüberwachung innerhalb zweier Konturerkennungsfelder durchgeführt, wobei die Konturerkennungsfelder über das Schutzfeld hervorstehen und dort zumindest teilweise nicht überlappen. Eine Auswerteeinheit ist vorgesehen, in welcher bei Registrieren eines Objekteingriffs im Schutzfeld eine Sicherheitsfunktion ausgelöst wird, wobei diese Sicherheitsfunktion dann unterdrückt wird, wenn zuvor innerhalb eines vorgegebenen Zeitintervalls zuerst in einem ersten Konturerkennungsfeld und dann im zweiten Konturerkennungsfeld ein Objekteingriff registriert wurde.

Der Erfindung liegt die Aufgabe zugrunde eine Überwachungseinrichtung der eingangsgenannten Art bereitzustellen, mittels derer eine verbesserte Sicherung von Gefahrenbereichen ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem optischen Sensor, mittels dessen eine Objektüberwachung innerhalb eines Schutzfelds durchgeführt wird. Drei Konturerkennungsfelder mit unterschiedlichen Längen sind vorgesehen. Die Konturerkennungsfelder stehen über das Schutzfeld hervor und überlappen dort zumindest teilweise nicht. Abhängig von der Sequenz von Belegungszuständen der Konturerkennungsfelder wird eine Vergrößerung oder Verkleinerung des Schutzfelds dadurch bewirkt, dass das längste Konturerkennungsfeld zwischen den beiden weiteren Konturkennungsfeldern angeordnet ist.

Die Erfindung betrifft weiterhin ein entsprechendes Verfahren.

Die Grundfunktion der erfindungsgemäßen Überwachungseinrichtung besteht darin, mit dem optischen Sensor eine Schutzfeldüberwachung durchzuführen, wodurch ein Gefahrenbereich an einer gefahrbringenden Anlage oder Maschine abgesichert wird.

Besonders vorteilhaft wird mit der Überwachungseinrichtung eine Gefahrenbereichsüberwachung an einer mobilen Maschine durchgeführt.

Insbesondere kann die mobile Maschine ein schienengeführtes Fahrzeug sein.

Zur Durchführung der Schutzfeldüberwachung ist vorteilhaft eine dem optischen Sensor zugeordnete Auswerteeinheit vorgesehen, die im optischen Sensor integriert sein kann oder eine externe Einheit bilden kann.

Dabei ist vorteilhaft die externe Auswerteeinheit eine sichere Steuerung, die über eine Schnittstelle mit dem optischen Sensor verbunden ist.

Generell wird in der Auswerteeinheit abhängig von Sensorsignalen des optischen Sensors ein Schaltsignal generiert, dessen Schaltzustände angeben ob sich ein Objekt im Schutzfeld befindet oder nicht.

Bei einer Objektdetektion im Schutzfeld wird eine Sicherheitsfunktion ausgelöst.

Die Sicherheitsfunktion kann dadurch ausgebildet sein, dass die zu überwachende Anlage oder Maschine stillgesetzt wird. Bei einer Vorfeldüberwachung eines Fahrzeugs besteht die Sicherheitsfunktion darin, das Fahrzeug anzuhalten.

Erfindungsgemäß sind zusätzlich zu dem Schutzfeld drei Konturerkennungsfelder vorgesehen, die über das Schutzfeld hervorstehen und sich im hervorstehenden Teil nicht oder höchstens teilweise überlappen.

Mit den über das Schutzfeld hervorstehenden Konturerkennungsfeldern können Objekte im Vorfeld des Schutzfeldes erkannt werden. Erfindungsgemäß wird abhängig von der Sequenz von Belegungszuständen der Konturerkennungsfelder das Schutzfeld vergrößert oder verkleinert. Für jedes Konturerkennungsfeld gibt es zwei Belegungszustände, nämlich einerseits, dass das Konturerkennungsfeld belegt ist, das heißt ein Objekt im Konturerkennungsfeld vorhanden ist und vom optischen Sensor detektiert wird, und andererseits, dass das Konturerkennungsfeld frei ist, das heißt es befindet sich kein Objekt im Konturerkennungsfeld.

Ein wesentlicher Aspekt der Erfindung besteht darin, dass die Konturerkennungsfelder jeweils unterschiedliche Längen aufweisen, das heißt die Längen der Konturerkennungsfelder sind nicht identisch oder näherungsweise gleich, sondern unterscheiden sich signifikant.

Da somit mit den einzelnen Konturerkennungsfeldern unterschiedliche Vorfeldbereiche detektiert werden, liefert die erfasste Sequenz der Belegungszustände der Konturerkennungsfelder eine zuverlässige, verwechslungssichere Information darüber, ob Belegungen der Konturerkennungsfelder von einem nichtsicherheitskritischen, insbesondere stationären Hindernis oder von einem sicherheitskritischen Objekt wie einer Person stammen.

Dadurch wird eine sichere Vorgabe der Größe des Schutzfelds ermöglicht.

Abhängig von den Objekteingriffen in den drei Konturerkennungsfeldern kann insbesondere das Schutzfeld an vorhandene Hindernisse optimal angepasst werden, um insbesondere das Schutzfeld so zu dimensionieren, dass möglichst wenig Freiräume zwischen dem Schutzfeld und dem Hindernis entstehen, um so eine möglichst vollständige Überwachung eines Gefahrenbereichs zu gewährleisten.

Eine besonders vorteilhafte Anwendung besteht in einer Gefahrenbereichsüberwachung einer mobilen Maschine wie zum Beispiel einem fahrerlosen Transportfahrzeug oder insbesondere einem schienengeführten Fahrzeug, welches zur Durchführung von Arbeitsvorgängen auf ein stationäres Hindernis wie eine Wand zubewegt oder von diesem wegbewegt wird. Der optische Sensor ist generell so an der mobilen Maschine angeordnet, dass mit dem optischen Sensor das Vorfeld der mobilen Maschine überwacht wird.

Abhängig davon ob und in welcher zeitlichen Folge Objekteingriffe in den Konturerkennungsfeldern registriert werden, wird dann das Schutzfeld vergrößert oder verkleinert, wodurch das Schutzfeld an den Raumbereich zwischen der mobilen Maschine und dem Hindernis optimal angepasst wird.

Eine geometrisch günstige Ausführungsform sieht vor, dass ein Konturerkennungsfeld mittig vor der mobilen Maschine vorgesehen ist. Die weiteren Konturerkennungsfelder stehen jeweils seitlich über die mobile Maschine hervor.

Mit dem mittigen Konturerkennungsfeld können direkt vor dem optischen Sensor beziehungsweise der mobilen Maschine vorhandene Hindernisse erfasst werden, während mit den weiteren Konturerkennungsfeldern auch seitlich angeordnete Hindernisse erfasst werden können.

Erfindungsgemäß ist das längste Konturerkennungsfeld K1 zwischen den beiden weiteren Konturerkennungsfeldern angeordnet.

Das mittlere Konturerkennungsfeld erstreckt sich insbesondere in Fahrtrichtung der mobilen Maschine. Dadurch dass das mittlere Konturerkennungsfeld am längsten ist, wird ein besonders großer Vorfeldbereich der mobilen Maschine erfasst.

Gemäß einer vorteilhaften Ausgestaltung ist der minimale Abstand der über das Schutzfeld hervorstehenden Segmente der beiden äußeren Konturerkennungsfelder K2, K3 so groß, dass diese nicht gleichzeitig von einer Person belegt werden können.

Damit ist gewährleistet, dass eine Person nie gleichzeitig in die beiden Konturerkennungsfelder eindringen kann. Durch diese geometrische Anordnung der Konturkennungsfelder können Personen besonders sicher von nichtsicherheitskritischen Hindernissen unterschieden werden.

Gemäß einer vorteilhaften Ausführungsform wird das Schutzfeld nur dann verkleinert, wenn die Konturerkennungsfelder K1, K2, K3 in einer vorgegebenen Sequenz nacheinander belegt werden.

Mit dieser Sequenz kann insbesondere erfasst werden, wenn sich eine mobile Maschine auf ein stationäres Hindernis wie eine Wand zubewegt. Die Konturerkennungsfelder werden dann entsprechend ihrer unterschiedlichen Längen nacheinander belegt, in dem das Hindernis in die einzelnen Konturerkennungsfelder eindringt. Abhängig von dieser Sequenz wird dann das Schutzfeld verkleinert, so dass das Hindernis nicht innerhalb des Schutzfelds liegt, wodurch ein unnötiges Auslösen einer Sicherheitsfunktion vermieden wird.

Weiter vorteilhaft wird das Schutzfeld vergrößert, wenn alle Konturerkennungsfelder K1, K2, K3 frei werden.

Alternativ wird das Schutzfeld vergrößert, wenn das längste Konturerkennungsfeld K 1 frei wird.

In beiden Fällen signalisieren die Belegungszustände der Konturerkennungsfelder, dass im Vorfeld des optischen Sensors, insbesondere der mobilen Maschine kein Hindernis vorhanden ist, so dass dann mit dem vergrößerten Schutzfeld ein größerer Vorfeldbereich überwacht werden kann, wodurch eine optimierte Gefahrenbereichsüberwachung realisiert wird.

Gemäß einer vorteilhaften Weiterbildung ist eine Zeitüberwachungseinheit vorgesehen, mittels der die Zeitdauer einer Sequenz von Belegungszuständen kontrolliert wird.

Insbesondere liegt eine gültige Sequenz für die Schutzfeld-Änderung dann vor, wenn deren Zeitdauer eine vorgegebene Mindestdauer überschreitet.

Durch diese Zeitüberwachung können nichtsicherheitskritische Hindernisse von Personen noch sicherer unterschieden werden. Aufgrund der unterschiedlichen Längen der Konturerkennungsfelder werden die Konturerkennungsfelder zu unterschiedlichen Zeiten durch ein Hindernis belegt. Fährt eine mobile Maschine mit dem optischen Sensor mit bekannter Geschwindigkeit auf ein Hindernis, erfolgen in vorgegebenen Zeitabständen die Belegungen der Konturerkennungsfelder durch das Hindernis was durch die Kontrolle der einzuhaltenden Mindestdauer kontrolliert werden kann.

Gemäß einer vorteilhaften Ausgestaltung ist der optische Sensor ein Flächendistanzsensor.

Je nach Ausbildung des optischen Sensors bilden das Schutzfeld und die Konturerkennungsfelder zwei- oder dreidimensionale Bereiche aus.

Vorteilhaft sind die Konturerkennungsfelder streifenförmig ausgebildet.

Hierbei wird dem Umstand Rechnung getragen, dass zur Beurteilung, ob ein stationäres Hindernis vorliegt oder nicht, eine lokale Detektion dieses Hindernisses in den einzelnen Konturerkennungsfeldern ausreichend ist.

Vorteilhaft sind die Dimensionen der Konturerkennungsfelder zeitabhängig.

Damit können die Konturerkennungsfelder selbst an sich verändernde Schutzfeldgrößen angepasst werden. Dies kann beispielsweise derart erfolgen, dass die Längen der Konturerkennungsfelder in einem bestimmten, konstanten Verhältnis zur Länge des aktuellen Schutzfeldes stehen.

Die Längenverhältnisse der Konturerkennungsfelder bleiben dabei vorteilhaft unverändert.

Die Erfindung wird im Folgenden anhand der Zeichnungen erläutert. Es zeigen:
- Figur 1:: Erstes Ausführungsbeispiel eines optischen Sensors.
- Figur 2:: Zweites Ausführungsbeispiel eines optischen Sensors.
- Figur 3:: Ausführungsbeispiel der erfindungsgemäßen Überwachungseinrichtung.

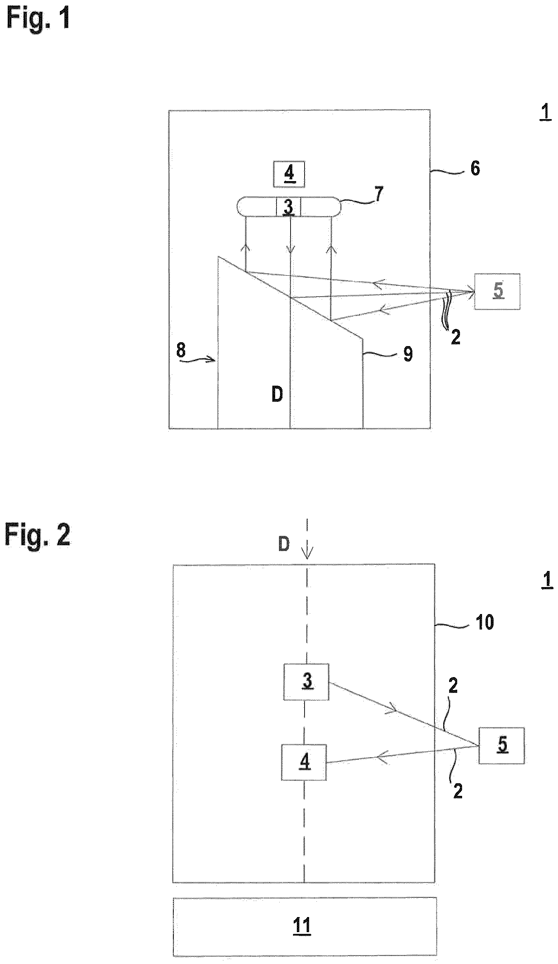

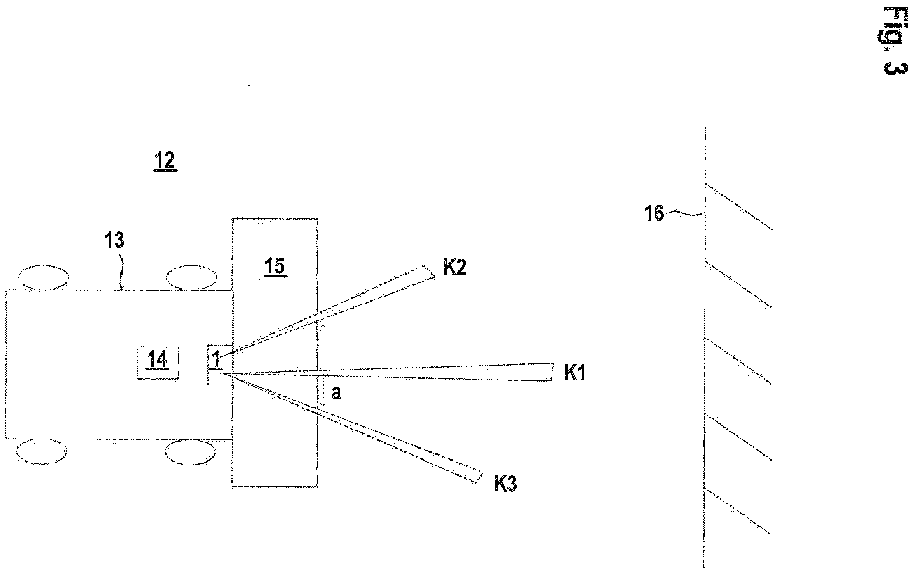

Die Figuren 1 und 2 zeigen Ausführungsbeispiele eines optischen Sensors 1, der für die erfindungsgemäße Überwachungseinrichtung 12 wie in Figur 3 beispielhaft dargestellt, eingesetzt wird.

Die Figuren 1 und 2 zeigen Ausführungsbeispiele von distanzmessenden optischen Sensoren 1, wobei die Distanzmessungen vorteilhaft nach einem Impuls-Laufzeitverfahren oder einem Phasenmessverfahren erfolgen.

Figur 1 zeigt ein Ausführungsbeispiel eines optischen Sensors 1 in Form eines Flächendistanzsensors, das heißt eines scannenden Distanzsensors. Zur Durchführung von Distanzmessungen weist der optische Sensor 1 einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor 1 für die Distanzbestimmungen ausgewertet werden.

Wie Figur 1 zeigt, sind die Sensorkomponenten der optischen Sensoren 1 in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor 1 erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell ist jedem optischen Sensor 1 eine nicht dargestellte Auswerteeinheit zugeordnet, in der die Empfangssignale des Empfängers 4 ausgewertet werden.

Für den Einsatz im Bereich der Sicherheitstechnik sind die optischen Sensoren 1 gemäß der Figuren 1 und 2 als Sicherheitssensor ausgebildet und weisen einen fehlersicheren Aufbau auf, der beispielsweise durch eine redundante Auswerteeinheit in Form zweier sich zyklisch gegenseitig überwachender Rechnereinheiten realisiert werden kann.

Figur 3 zeigt ein Ausführungsbeispiel der erfindungsgemäßen Überwachungseinrichtung 12 mit einem optischen Sensor 1 wie in den Figuren 1 und 2 beschrieben.

Der optische Sensor 1 befindet sich an der Frontseite eines fahrerlosen Transportfahrzeugs 13, das von einer sicheren Steuerung 14 gesteuert wird. Anstelle des fahrerlosen Transportfahrzeugs 13 kann auch eine andere mobile Maschine vorgesehen sein, die insbesondere schienengeführt sein kann. Die sichere Steuerung 14 übernimmt im vorliegenden Fall auch die Funktion der Auswerteeinheit des optischen Sensors 1 und ist hierzu mit dem optischen Sensor 1 über eine Schnittstelle, beispielsweise einem Feldbus verbunden um bidirektional Daten auszutauschen. Der Datenaustausch zwischen dem optischen Sensor 1 und der Steuerung 14 erfolgt ebenso sicher, beispielsweise über einen sicheren Feldbus.

Alternativ zum sicheren Feldbus kann die Schnittstelle zwischen dem Sensor und der sicheren Steuerung aus mehreren Leitungen bestehen, die digitale Signale übertragen.

Mit dem optischen Sensor 1 erfolgt eine Objektüberwachung eines Schutzfeldes 15. Das Schutzfeld 15 ist im vorliegenden Fall als Flächenbereich ausgebildet, der das Vorfeld des fahrerlosen Transportfahrzeugs 13 abdeckt.

Die Schutzfeld-Überwachung erfolgt derart, dass abhängig von einem Objekteingriff in einem Schutzfeld 15 ein binäres Schaltsignal generiert wird, dessen Schaltzustände angeben, ob ein Objekt 5 im Schutzfeld 15 vorhanden ist oder nicht. Ist ein Objekt 5 im Schutzfeld 15 vorhanden, wird durch den entsprechenden Schaltzustand des Schaltsignals eine Sicherheitsfunktion derart ausgelöst, dass eine gefahrbringende Maschine stillgesetzt wird, sodass von dieser keine Gefahren mehr ausgehen können. Im vorliegenden Fall besteht die Sicherheitsfunktion darin, das fahrerlose Transportfahrzeug 13 anzuhalten.

Erfindungsgemäß werden mit dem optischen Sensor 1 auch mehrere Konturerkennungsfelder K1, K2, K3 überwacht. Anhand der Überwachung der Konturerkennungsfelder K1, K2, K3 wird das Schutzfeld 15 angepasst, während sich das fahrerlose Transportfahrzeug 13 auf eine Wand 16 als stationäres Hindernis zubewegt oder von der Wand 16 wegbewegt. Die Anpassung der Größe des Schutzfeldes 15 erfolgt generell derart, dass mit dem Schutzfeld 15 der Bereich zwischen fahrerlosem Transportfahrzeug 13 und der Wand 16 möglichst vollständig erfasst wird.

Die Konturerkennungsfelder K1, K2, K3 bilden streifenförmige langgestreckte flächige Bereiche, die sich über den vorderen Rand des Schutzfeldes 15 hinauserstrecken und sich dort nicht überlappen.

Erfindungsgemäß weisen alle Konturerkennungsfelder K1, K2, K3 unterschiedliche Längen auf. Das längste Konturerkennungsfeld K1 ist mittig vor dem fahrerlosen Transportfahrzeug 13 vorgesehen. Die Längsachse des Konturerkennungsfelds K1 verläuft entlang der Längsachse des fahrerlosen Transportfahrzeugs. 13. Die kürzeren Konturerkennungsfelder K2, K3 sind beiderseits des ersten Konturerkennungsfelds K1 angeordnet und erstrecken sich seitlich über die Ränder des fahrerlosen Transportfahrzeugs 13 hinaus.

In Figur 3 ist der minimale Abstand der Konturerkennungsfelder K2, K3 außerhalb des Schutzfelds 15 mit a bezeichnet. Dieser ist so groß gewählt, dass eine Person, auch nicht mit gespreizten Beinen oder Armen gleichzeitig in diese Konturerkennungsfelder eindringen kann. Typischerweise ist der minimale Abstand a größer als 700 mm.

Die Konturerkennungsfelder K1, K2, K3 weisen jeweils zwei Belegungszustände auf, nämlich den Belegungszustand "belegt", wenn ein Objekt 5 im jeweiligen Konturerkennungsfeld vorhanden ist, und den belegungszustand "frei", wenn kein Objekt 5 im jeweiligen Konturerkennungsfeld vorhanden ist.

Erfindungsgemäß wird über die Auswerteeinheit eine Vergrößerung oder Verkleinerung des Schutzfelds 15 abhängig von mit dem optischen Sensor 1 registrierten Sequenzen von Belegungszuständen, insbesondere Belegungszustandsänderungen der drei Konturerkennungsfelder K1, K2, K3 vorgenommen.

Insbesondere wird das Schutzfeld 15 nur dann verkleinert, wenn die Konturerkennungsfelder K1, K2, K3 in einer vorgegebenen Sequenz nacheinander belegt werden.

Fährt das fahrerlose Transportfahrzeug 13 auf die Wand 16 zu, gilt diese als erkannt, wenn zuerst das mittlere Konturerkennungsfeld K1 belegt wird, darauffolgend das zweitlängste Konturerkennungsfeld K3 belegt wird und zuletzt das kürzeste Konturerkennungsfeld K2 belegt wird. Dann wird das Schutzfeld 15 so verkleinert, dass die Wand 16 außerhalb des Schutzfelds 15 liegt, so dass durch diese nicht unnötig eine Sicherheitsfunktion generiert wird.

Demgegenüber wird das Schutzfeld 15 vergrößert, wenn alle Konturerkennungsfelder K1, K2, K3 frei werden.

Alternativ wird das Schutzfeld 15 vergrößert, wenn das längste Konturerkennungsfeld K1 frei wird.

Das oder die freien Konturerkennungsfelder signalisieren ein freies Vorfeld, das eine Vergrößerung des Schutzfelds 15 gestattet, ohne dass in diesem ein stationäres Hindernis vorhanden ist.

Zweckmäßig ist eine Zeitüberwachungseinheit vorgesehen, die vorteilhaft in der Auswerteeinheit integriert ist. Mit dieser erfolgt eine Kontrolle der Zeitdauer der Sequenzen von Belegungszuständen, die zu einer Vergrößerung oder Verkleinerung des Schutzfeldes 15 führen können.

Insbesondere wird mit der Zeitüberwachungseinheit kontrolliert, ob eine Sequenz eine bestimmte Mindestdauer überschreitet, was ein Kriterium für eine gültige Sequenz insbesondere für die Verkleinerung des Schutzfelds 15 ist.

Aufgrund der unterschiedlichen Längen der Konturerkennungsfelder muss bei vorgegebener Fahrzeuggeschwindigkeit zwischen den Belegungszustandsänderungen der einzelnen Schutzfelder 15 eine bestimmte Zeitdauer vergehen, was mittels des Einhaltens der Mindestzeit kontrolliert wird.

### Bezugszeichenliste

- (1): Optischer Sensor
- (2): Lichtstrahl
- (3): Sender
- (4): Empfänger
- (5): Objekt
- (6): Gehäuse
- (7): Empfangsoptik
- (8): Ablenkeinheit
- (9): Winkelspiegel
- (10): Messkopf
- (11): Sockel
- (12): Überwachungseinrichtung
- (13): Fahrerloses Transportfahrzeug
- (14): Steuerung
- (15): Schutzfeld
- (16): Wand

- D: Drehachse
- K1: Konturerkennungsfeld
- K2: Konturerkennungsfeld
- K3: Konturerkennungsfeld

## Patentansprüche

1. Überwachungseinrichtung (12) mit einem optischen Sensor (1), mittels dessen eine Objektüberwachung innerhalb eines Schutzfelds (15) durchgeführt wird, wobei dass drei Konturerkennungsfelder (K1, K2, K3) mit unterschiedlichen Längen vorgesehen sind, wobei die Konturerkennungsfelder (K1, K2, K3) über das Schutzfeld (15) hervorstehen und dort zumindest teilweise nicht überlappen, und wobei abhängig von der Sequenz von Belegungszuständen der Konturerkennungsfelder (K1, K2, K3) eine Vergrößerung oder Verkleinerung des Schutzfelds (15) bewirkt ist, **dadurch gekennzeichnet, dass** das längste Konturerkennungsfeld (K1) zwischen den beiden weiteren Konturkennungsfeldern angeordnet ist.

2. Überwachungseinrichtung (12) nach Anspruch 1, **dadurch gekennzeichnet, dass** der optische Sensor (1) an einer mobilen Maschine so angeordnet ist, dass mit dem Schutzfeld (15) das Vorfeld der mobilen Maschine überwacht wird.

3. Überwachungseinrichtung (12) nach Anspruch 2, **dadurch gekennzeichnet, dass** ein Konturerkennungsfeld (K1) mittig vor der mobilen Maschine vorgesehen ist, und dass die weiteren Konturerkennungsfelder (K2, K3) jeweils seitlich über die mobile Maschine hervorstehen.

4. Überwachungseinrichtung (12) nach einem der Ansprüche 1 bis 3, **dadurch gekennzeichnet, dass** der minimale Abstand der über das Schutzfeld (15) hervorstehenden Segmente der beiden äußeren Konturerkennungsfelder (K2, K3) so groß ist, dass diese nicht gleichzeitig von einer Person belegt werden können.

5. Überwachungseinrichtung (12) nach einem der Ansprüche 1 bis 4, **dadurch gekennzeichnet, dass** das Schutzfeld (15) nur dann verkleinert wird, wenn die Konturerkennungsfelder (K1, K2, K3) in einer vorgegebenen Sequenz nacheinander belegt werden.

6. Überwachungseinrichtung (12) nach einem der Ansprüche 1 bis 5, **dadurch gekennzeichnet, dass** das Schutzfeld (15) vergrößert wird, wenn alle Konturerkennungsfelder (K1, K2, K3) frei werden.

7. Überwachungseinrichtung (12) nach einem der Ansprüche 1 bis 5, **dadurch gekennzeichnet, dass** das Schutzfeld (15) vergrößert wird, wenn das längste Konturerkennungsfeld (K1) frei wird.

8. Überwachungseinrichtung (12) nach einem der Ansprüche 1 bis 7, **dadurch gekennzeichnet, dass** eine Zeitüberwachungseinheit vorgesehen ist, mittels der die Zeitdauer einer Sequenz von Belegungszuständen kontrolliert wird.

9. Überwachungseinrichtung (12) nach Anspruch 8, **dadurch gekennzeichnet, dass** eine gültige Sequenz für die Schutzfeld-Änderung dann vorliegt, wenn deren Zeitdauer eine vorgegebene Mindestdauer überschreitet.

10. Überwachungseinrichtung (12) nach einem der Ansprüche 1 bis 9, **dadurch gekennzeichnet, dass** der optische Sensor (1) ein Flächendistanzsensor ist.

11. Überwachungseinrichtung (12) nach einem der Ansprüche 1 bis 10, **dadurch gekennzeichnet, dass** das Schutzfeld (15) und die Konturerkennungsfelder (K1, K2, K3) zwei- oder dreidimensionale Bereiche ausbilden.

12. Überwachungseinrichtung (12) nach einem der Ansprüche 1 bis 5, **dadurch gekennzeichnet, dass** die Konturerkennungsfelder (K1, K2, K3) streifenförmig ausgebildet sind.

13. Überwachungseinrichtung (12) nach einem der Ansprüche 1 bis 12, **dadurch gekennzeichnet, dass** der optische Sensor (1) eine Auswerteeinheit aufweist, oder dass dem optischen Sensor (1) eine externe Auswerteeinheit zugeordnet ist.

14. Überwachungseinrichtung (12) nach Anspruch 13, **dadurch gekennzeichnet, dass** die externe Auswerteeinheit eine sichere Steuerung (14) ist, die über eine Schnittstelle mit dem optischen Sensor (1) verbunden ist.

15. Überwachungseinrichtung (12) nach einem der Ansprüche 13 oder 14, **dadurch gekennzeichnet, dass** in der Auswerteeinheit abhängig von Sensorsignalen des optischen Sensors (1) ein Schaltsignal generiert wird, dessen Schaltzustände angeben, ob sich ein Objekt (5) im Schutzfeld (15) befindet oder nicht.

16. Überwachungseinrichtung (12) nach Anspruch 15, **dadurch gekennzeichnet, dass** bei einer Objektdetektion im Schutzfeld (15) eine Sicherheitsfunktion ausgelöst wird.

17. Überwachungseinrichtung (12) nach einem der Ansprüche 2 bis 16, **dadurch gekennzeichnet, dass** die mobile Maschine ein schienen-geführtes Fahrzeug ist.

18. Verfahren zum Betrieb einer Überwachungseinrichtung (12) mit einem optischen Sensor (1), mittels dessen eine Objektüberwachung innerhalb eines Schutzfeldes (15) durchgeführt wird, wobei dass drei Konturerkennungsfelder (K1, K2, K3) mit unterschiedlichen Längen vorgesehen sind, wobei die Konturerkennungsfelder (K1, K2, K3) über das Schutzfeld (15) hervorstehen und dort zumindest teilweise nicht überlappen, und wobei abhängig von der Sequenz von Belegungszuständen der Konturerkennungsfelder eine Vergrößerung oder Verkleinerung des Schutzfeldes (15) bewirkt ist, **dadurch gekennzeichnet, dass** das längste Konturerkennungsfeld (K1) zwischen den beiden weiteren Konturkennungsfeldern angeordnet ist.

## Claims

1. A monitoring device (12) having an optical sensor (1), by means of which object monitoring is carried out within a protective field (15), wherein three contour detection fields (Kl, K2, K3) of different lengths are provided, wherein the contour detection fields (Kl, K2, K3) project beyond the protective field (15) and do not overlap there, at least partially, and wherein an enlargement or reduction of the protective field (15) is effected depending on the sequence of occupancy states of the contour detection fields (Kl, K2, K3), **characterised in that** the longest contour detection field (Kl) is arranged between the two further contour detection fields.

2. A monitoring device (12) according to claim 1, **characterised in that** the optical sensor (1) is arranged on a mobile machine in such a way that the apron of the mobile machine is monitored with the protective field (15).

3. A monitoring device (12) according to claim 2, **characterised in that** a contour detection field (Kl) is provided centrally in front of the mobile machine, and **in that** the further contour detection fields (K2, K3) project laterally beyond the mobile machine in each case.

4. A monitoring device (12) according to one of the claims 1 to 3, **characterised in that** the minimum distance between the segments of the two outer contour detection fields (K2, K3) projecting over the protective field (15) is so large that they cannot be occupied simultaneously by one person.

5. A monitoring device (12) according to one of the claims 1 to 4, **characterised in that** the protective field (15) is only reduced in size if the contour detection fields (K1, K2, K3) are occupied one after the other in a predetermined sequence.

6. A monitoring device (12) according to one of claims 1 to 5, **characterised in that** the protective field (15) is enlarged when all contour detection fields (Kl, K2, K3) become free.

7. A monitoring device (12) according to one of the claims 1 to 5, **characterised in that** the protective field (15) is enlarged when the longest contour detection field (Kl) becomes free.

8. A monitoring device (12) according to one of claims 1 to 7, **characterised in that** a time monitoring unit is provided, by means of which the duration of a sequence of occupancy states is controlled.

9. A monitoring device (12) according to claim 8, **characterised in that** a valid sequence for the protective field change is present if its duration exceeds a predetermined minimum duration.

10. A monitoring device (12) according to one of claims 1 to 9, **characterised in that** the optical sensor (1) is an area distance sensor.

11. A monitoring device (12) according to one of claims 1 to 10, **characterised in that** the protective field (15) and the contour recognition fields (K1, K2, K3) form two- or three-dimensional areas.

12. A monitoring device (12) according to one of claims 1 to 5, **characterised in that** the contour detection fields (Kl, K2, K3) are designed in the form of strips.

13. A monitoring device (12) according to one of claims 1 to 12, **characterised in that** the optical sensor (1) has an evaluation unit, or **in that** an external evaluation unit is assigned to the optical sensor (1).

14. A monitoring device (12) according to claim 13, **characterised in that** the external evaluation unit is a safe controller (14) which is connected to the optical sensor (1) via an interface.

15. A monitoring device (12) according to one of claims 13 or 14, **characterised in that** a switching signal is generated in the evaluation unit as a function of sensor signals of the optical sensor (1), the switching states of which indicate whether or not an object (5) is located in the protective field (15).

16. A monitoring device (12) according to claim 15, **characterised in that** a safety function is triggered when an object is detected in the protective field (15).

17. A monitoring device (12) according to one of claims 2 to 16, **characterised in that** the mobile machine is a rail-guided vehicle.

18. A method for operating a monitoring device (12) with an optical sensor (1), by means of which object monitoring is carried out within a protective field (15), wherein three contour detection fields (Kl, K2, K3) of different lengths are provided, wherein the contour detection fields (Kl, K2, K3) project beyond the protective field (15) and do not overlap there at least partially, and
wherein an enlargement or reduction of the protective field (15) is effected in dependence on the sequence of occupancy states of the contour detection fields, **characterised in that** the longest contour detection field (Kl) is arranged between the two further contour detection fields.

## Revendications

1. Dispositif de surveillance (12) doté d'un capteur optique (1), permettant de surveiller un objet à l'intérieur d'un champ de protection (15), dans lequel trois champs de détection de contour (Kl, K2, K3) de longueurs différentes sont prévus, dans lequel les champs de détection de contour (Kl, K2, K3) dépassent le champ de protection (15) et ne s'y chevauchent pas, au moins partiellement, et dans lequel un agrandissement ou une réduction du champ de protection (15) est effectué en fonction de la séquence des états d'occupation des champs de détection de contour (Kl, K2, K3), au moins partiellement, et dans laquelle un élargissement ou une réduction du champ de protection (15) est effectué en fonction de la séquence des états d'occupation des zones de détection de contour (Kl, K2, K3), **caractérisé par le fait que** la zone de détection de contour la plus longue (Kl) est disposée entre les deux autres zones de détection de contour.

2. Dispositif de surveillance (12) selon la revendication 1, **caractérisé par le fait que** le capteur optique (1) est placé sur une machine mobile de manière à ce que le tablier de la machine mobile soit surveillé par le champ de protection (15).

3. Dispositif de surveillance (12) selon la revendication 2, **caractérisé par le fait qu'**une zone de détection de contour (Kl) est prévue au centre devant la machine mobile et que les autres zones de détection de contour (K2, K3) dépassent latéralement de la machine mobile.

4. Dispositif de surveillance (12) selon l'une des revendications 1 à 3, **caractérisé par le fait que** la distance minimale entre les segments des deux champs de détection de contours extérieurs (K2, K3) faisant saillie sur le champ de protection (15) est si grande qu'ils ne peuvent pas être occupés simultanément par une personne.

5. Dispositif de surveillance (12) selon l'une des revendications 1 à 4, **caractérisé par le fait que** le champ de protection (15) n'est réduit que si les champs de détection de contour (K1, K2, K3) sont occupés l'un après l'autre dans un ordre prédéterminé.

6. Dispositif de surveillance (12) selon l'une des revendications 1 à 5, **caractérisé en ce que** le champ de protection (15) est agrandi lorsque toutes les zones de détection de contour (Kl, K2, K3) sont libres.

7. Dispositif de surveillance (12) selon l'une des revendications 1 à 5, **caractérisé en ce que** le champ de protection (15) est élargi lorsque le champ de détection de contour le plus long (Kl) devient libre.

8. Dispositif de surveillance (12) selon l'une des revendications 1 à 7, **caractérisé en ce qu'**une unité de surveillance du temps est prévue, au moyen de laquelle la durée d'une séquence d'états d'occupation est contrôlée.

9. Dispositif de surveillance (12) selon la revendication 8, **caractérisé en ce qu'**une séquence valide pour le changement de champ de protection est présente si sa durée dépasse une durée minimale prédéterminée.

10. Dispositif de surveillance (12) selon l'une des revendications 1 à 9, **caractérisé en ce que** le capteur optique (1) est un capteur de distance.

11. Dispositif de surveillance (12) selon l'une des revendications 1 à 10, **caractérisé par le fait que** le champ de protection (15) et les champs de reconnaissance des contours (K1, K2, K3) forment des zones bidimensionnelles ou tridimensionnelles.

12. Dispositif de surveillance (12) selon l'une des revendications 1 à 5, **caractérisé en ce que** les champs de détection des contours (Kl, K2, K3) sont conçus sous forme de bandes.

13. Dispositif de surveillance (12) selon l'une des revendications 1 à 12, **caractérisé en ce que** le capteur optique (1) possède une unité d'évaluation ou **en ce qu'**une unité d'évaluation externe est affectée au capteur optique (1).

14. Dispositif de surveillance (12) selon la revendication 13, **caractérisé en ce que** l'unité d'évaluation externe est un contrôleur de sécurité (14) qui est connecté au capteur optique (1) via une interface.

15. Dispositif de surveillance (12) selon l'une des revendications 13 ou 14, **caractérisé par le fait qu'**un signal de commutation est généré dans l'unité d'évaluation en fonction des signaux du capteur optique (1), dont les états de commutation indiquent si un objet (5) se trouve ou non dans le champ de protection (15).

16. Dispositif de surveillance (12) selon la revendication 15, **caractérisé par le fait qu'**une fonction de sécurité est déclenchée lorsqu'un objet est détecté dans le champ de protection (15).

17. Dispositif de surveillance (12) selon l'une des revendications 2 à 16, **caractérisé par le fait que** la machine mobile est un véhicule guidé par rail.

18. Procédé d'utilisation d'un dispositif de surveillance (12) doté d'un capteur optique (1), permettant de surveiller un objet dans un champ de protection (15), dans lequel trois champs de détection de contour (Kl, K2, K3) de longueurs différentes sont prévus, dans lequel les champs de détection de contour (Kl, K2, K3) dépassent le champ de protection (15) et ne s'y chevauchent pas au moins partiellement, et
un élargissement ou une réduction de la zone de protection (15) est effectué en fonction de la séquence des états d'occupation des zones de détection de contour, **caractérisé par le fait que** la zone de détection de contour la plus longue (Kl) est disposée entre les deux autres zones de détection de contour.
